# EUROPEAN PATENT SPECIFICATION

(11) **EP 2 647 069 B1**
(45) Date of publication and mention of the grant of the patent: **10.09.2014**
(21) Application number: 11818926.5
(22) Date of filing: 28.11.2011
(51) Int. Cl.: H01M 2/30

(54) **EQUIPMENT FOR LOADING ITEMS IN FORGING PRESSES**
VORRICHTUNG ZUM LADEN VON OBJEKTEN IN SCHMIEDEPRESSEN
ÉQUIPEMENT PERMETTANT DE CHARGER DES ARTICLES DANS DES PRESSES À FORGER

(30) Priority: 29.11.2010 IT BS20100192
(43) Date of publication of application: 09.10.2013
(73) Proprietor: Water Gremlin Aquila Company SpA, 25060 Cellatica (BS) (IT)
(72) Inventor: FERRARI, Barbara, 25060 CELLATICA (BS) (IT)
(74) Representative: Sangiacomo, Ines
(86) International application number: PCT/IB2011/055324
(87) International publication number: WO 2012/073174

(56) References cited:
- EP-A2- 0 405 117
- EP-B1- 0 261 311
- JP-A- 55 057 259

## Description

### Field of the Invention

The present invention concerns an equipment for loading items to be pressed by a die assembled on forging presses.

The equipment could be used particularly in the forging process of bushes for poles or lugs in motor vehicle batteries.

Hereinafter it will be described referring to the use in this field, without anyway excluding the possible adoption and use in other similar fields.

### State of the Art

The poles or lugs in motor vehicle batteries - afterwards simply referred as lug/s - are usually composed of bushes usually made of lead, which could be realized by cold forging with a process described in Patent IT 1 230 937, for example.

According to this process, every battery lug is obtained starting from a substantially cylindrical block, having a predetermined volume. The block is loaded and locked between two opposing matrices of a forming die assembled on a forging press, such as to define the outer shape of the battery lug, and then it is subjected to an axial compression by a fixed punch placed in the lower portion of the die and such to define a recess inside the resulting semifinished element. This semifinished element is then subjected to finishing processes, if needed.

A problem of this process is represented by loading in sequence every single initial block into the die of the forging press.

At the moment a feeding equipment is known and used in the field herein considered, comprising basically a turning feed plate and a translating arm associated one to another. Particularly, the turning feed plate is provided with two diametrically opposed imprints both adapted to receive an initial block and it is driven to rotate alternatively of 180° between two extreme positions. In a first position of the turning plate, a first imprint is positioned to receive from a loader a initial block; in a second position of the rotating plate, rotated of 180°, the block is picked-up from the first imprint by the translating arm for its delivery into the press die, whereas a second block is loaded in the second imprint of the disc then present at the loader. And so on alternatively for both the two imprints of the turning plate.

For its part, the translating arm is driven simultaneously with the alternative rotation of the rotating plate between two extreme positions, it is provided with a gripper and it is arranged to pick-up every initial block from the respective imprint of said plate and to insert it into the die on the press.

According to an embodiment, the translating arm is substantially straight, it is arranged on the directrix of the plate imprint from which a block has to be picked-up from time to time and it is driven to move in orthogonal planes, typically vertically and horizontally, in parallel to itself.

In practice, the sequence of translating arm movements in relation to the feed plate may be as follows.

Starting from a rest position, a first movement vertically of the translating arm from the top to bottom allows the gripper on board to be flushed with the block to be grasped and picked-up. Then a vertically opposite movement of the translating arm will follow, that is from the bottom to top, allowing to remove the block grasped by the gripper from the respective imprint of the feed plate. Then a translating arm moves horizontally towards the forging press, where the gripper on board will deposit the block into the forming die, open at the time, with a movement from the top to bottom. At this point the translating arm comes back in the initial position with a reversed movement order.

Alternatively the translating arm may be arranged and driven to carry out both movements in height and angular displacements with respect to the feed plate, between the latter and the die on the press.

However, and disadvantageously, on the one hand the alternative rotation of 180° of the feed plate between the two extreme positions, respectively for loading and picking-up each single initial element, and on the other hand the vertically and horizontally combined movements of the translating arm, need for relatively long execution times, come to negatively affecting the feeding frequency of the forging press and then production, time and cost capacities of the battery lugs to be made. Further the whole with the disadvantage of having to provide relatively complex and onerous driving and controlling systems and to take into account automatically of the inertias of moving members.

### Object and Summary of the Invention

Object of the present invention is to remedy the afore said drawbacks and disadvantages of the known art and, correspondingly, to improve the feeding conditions of a forging press, to reduce the loading times into the machine and the forging times of each single elements and to thereby increase the productiveness, moreover with a simplified feeding equipment, less bulky and more convenient to handle.

According to the invention such a job is carried out by an equipment for feeding initial blocks to a forging press, particularly for the production of bushes for battery lugs for motor vehicles according to the preamble of claim 1, where the feed plate is provided with a plurality of imprints angularly distanced around its rotation axis and it is controlled to rotate intermittently from time to time of an angle corresponding to the distance between every two consecutive imprints, and the translating arm is guided and it is susceptible only to move forward and back rectilinearly between a pick-up position of each individual initial block from an imprint of the feed plate and the die on the forging press to be fed.

Further embodiments of the invention will be reported in the dependent claims.

Preferably, the number of the imprints on the feed plate, intended for receiving the initial blocks, will be not less than four, but rather from six to twelve or more, equally angularly distanced of an angle submultiple of 360°.

Further, the feed plate is associated with an elevator operating at one its imprint which, from time to time, is next to it, as a consequence of the intermittent plate rotation, and acting from the bottom to the top to lift up the block above the plate when the latter is grasped by the translating arm gripper.

Therefore, and advantageously, the feed plate may be rotated, although step by step too, always and simply in the same directions. Further, thanks to its plurality of imprints, it could receive and carry more initial blocks with a little angular distance from one another between the loading area for blocks in the respective imprints by the loading channel and the pick-up area of each single block by the translating arm. Therefore a rotation of the loading plate of a little angle is enough to position every time a block at the pick up area by the translating arm. Thereby the rotation times of the feed plate and the pick-up of each initial block are shortened.

For its part, the translating arm, being subjected to forward and back rectilinear movements, allows to reduce the translating times of each initial item from the feed plate to the die on the press. The whole is then directed to speed up the feed of the initial blocks to the forging press and thereby to increase the production of forged items per time unit.

### Brief Description of the Drawings

Further details of the invention will be evident from the following description course made with reference, by way of example only and without limitation, to the attached drawings, in which:

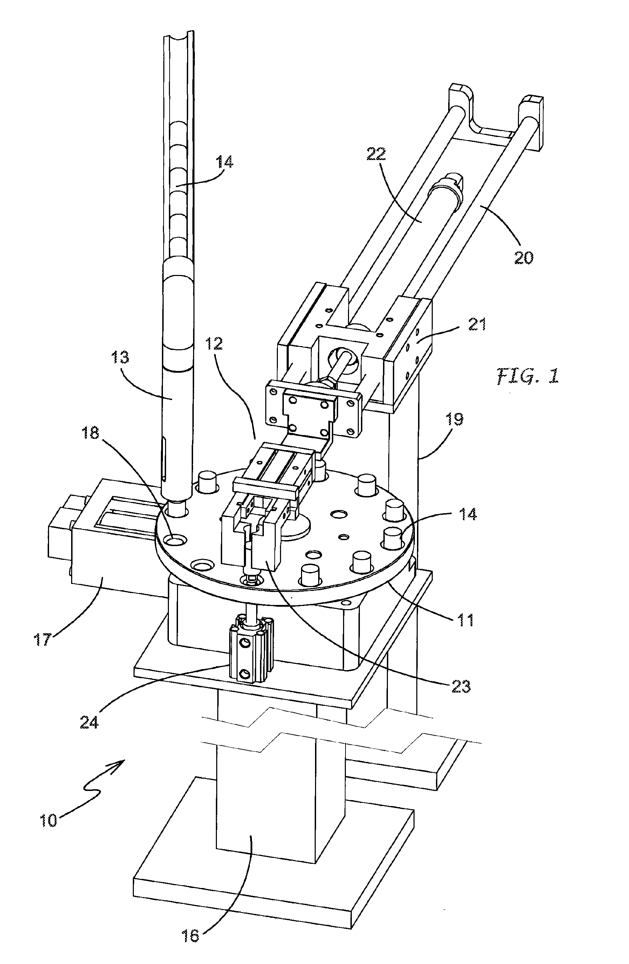

Fig. 1 shows a perspective view of the equipment according to the invention;
Fig. 2 shows a top view of the equipment in Fig. 1; and
Fig. 3 shows a top view of the equipment in Fig. 2.

### Detailed Description of the Invention

As shown in said drawings, the equipment 10 comprises basically a feed plate 11, a translating arm 12 and a loading channel 13 for the delivery of the initial blocks 14 intended for producing forged semifinished items by a die - not represented - assembled on a forging press indicated generally with the numeral 15.

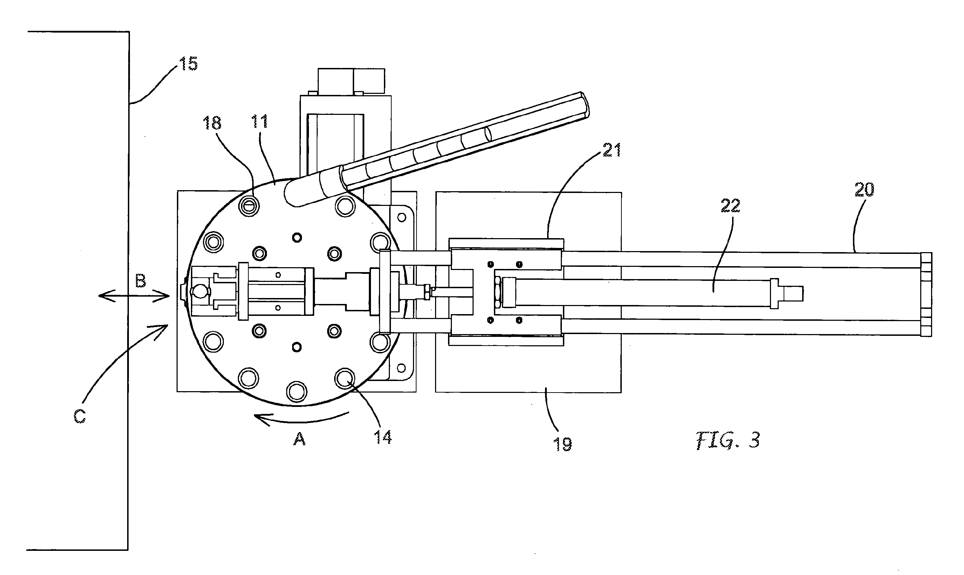

Particularly, the feed plate 11 is carried by a support 16 which is assembled so that to be able to rotate intermittently around a vertical axis X, for example in the direction of the arrow A in fig. 3, controlled by a respective electric, hydraulic or pneumatic actuator 17.

Substantially, the feed plate 11 is next to the press 15, roughly flush or slightly higher than the die on the press itself. It is provided with, at its periphery, a plurality of imprints or seats 18, anyway more than two, preferably from four to twelve or more, angularly equidistant around the rotation axis X, each intended for receiving an initial block 14 delivered thereto by a loading channel 13. The intermittently rotation of the feed plate 11 is then correlated with the angular distance between the imprints 18. It is to say that the feed plate 11 is driven to move forward step by step every time of an angle comprised between every two consecutive imprints 18.

The loading channel 13, known by itself, is in a fixed position and it is intended for loading in sequence the initial blocks 14 individually into the imprints 18 of the feed plate 11 as they come at said loading channel 13, because of the intermittent rotation of said plate.

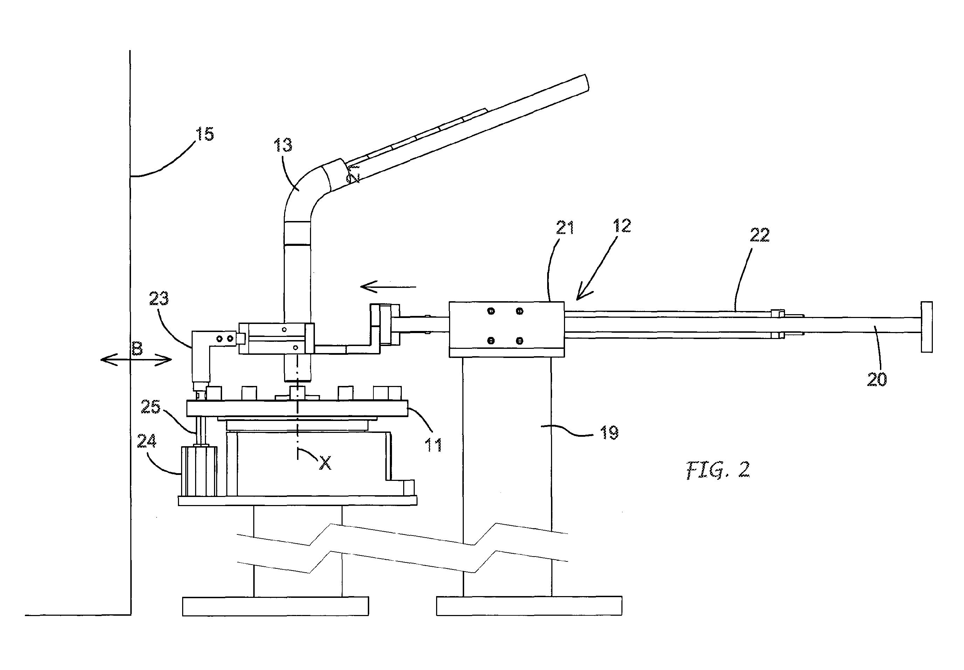

The translating arm 12 is assembled horizontally on a support 19 which may be separated or integrated with the support 16 of the feed plate 11. It extends above the feed plate 11 and it can be moved alternatively according to a straight path B - Fig. 2 - between a retracted, passive position, towards said feed plate 11 and an advanced, active position, towards the die on the press and vice versa, passing above an imprint 18 that is from time to time in a pick-up area of a block 14, shown with C letter.

For its rectilinear movements, the translating arm 12 comprises longitudinal guide means 20 sliding in fixed counter-guides 21 carried by the respective support 19 and it is connected and driven by at least one pneumatic cylinder 22, for example.

At its end facing to the press 15, the translating arm 12 is provided with a pneumatic gripper 23 intended for picking up each block 14 in sequence from the feed plate to transfer it to the die on the press. Such a gripper is of a known type, as well as it is configured and driven as usual for its opening and closing.

The equipment further comprises an elevator 24 associated with the feed plate 11 in the C area for picking-up each block 14 from each imprint 18 of the plate itself. Particularly, the elevator 24 is disposed under a feed plate 11 and it is composed of the stem 25 of a pneumatic cylinder movable vertically from a lowered rest position to a raised working position. The stem 25 is flush with the imprint of the feed plate, which in its turn is in the afore said pick-up area C and it is intended, when in the raised position, for lifting the block in such an imprint so that it could be grasped by the gripper 23 of the translating arm 12.

The intermittently rotating movement of the feed plate 11, the alternative movements of the translating arm 12 between the retracted and advanced positions, the closing and opening of the gripper 23, and the activation and deactivation of the elevator 24 will be managed by a conveniently programmed control unit.

With the so structured equipment, the intermittent rotation of the feed plate 11 allows to displace the initial block 14 in succession into the seats or imprints 18 of the feed plate 11 by means of the loading channel 13, and then to carry step by step these blocks in sequence into the pick-up area C. Here, the elevator 24 will raise the block 14 present in the imprint 18 next to it. The gripper 23 of the translating arm 12, which is in its retracted position, is closed to grasp the block 14 raised at the moment. Then, the raising stem 25 retracts, allowing the rotation of a further step of the feed plate 11 towards the loading channel 13, whereas the translating arm 12 is driven and goes forwards to the press, where the gripper 23 is open to release the block into the die.

Then, the arm is moved backed into the retracted position, ready to grasp and translate a subsequent block from the feed plate to the die.

To the afore described equipment modifications or changes could be made, without in any case coming out from the scope of the invention defined in the following claims.

## Claims

1. Equipment for loading initial blocks to be pressed in a die assembled on forging presses, comprising a feed plate turning around a rotation axis and provided with imprints designed to receive individually the initial blocks, a loading channel for the delivery of a initial block in each imprint of the feed plate, and a translating arm provided with a gripper and designed to extract each individual initial block from the feed plate so as to transfer it into the die of the forging press, the equipment **characterized in that** the feed plate (11) is provided with a multiplicity of imprints (18) angularly spaced around its rotation axis (X) and it is controlled to rotate intermittently from time to time of an angle corresponding to the distance between every two consecutive imprints, and **in that** the translating arm (12) is guided horizontally and it is susceptible only to move forward and back rectilinearly between a pick-up position of each individual initial block from an imprint of said feed plate and the die on the forging press.

2. Equipment according to claim 1, **characterized in that** the feed plate (11) is provided with a number of imprints (18) not less than four, preferably from six to twelve or more, equally distanced at an angle along its periphery.

3. Equipment according to claim 1 or 2 **characterized in that** the feed plate is associated with an elevator (24) operating at an imprint (18) containing a initial block (14) and operating from the bottom to the top so as to raise the block in said imprint above the feed plate when said block is grasped and picked-up by the gripper (23) of the translating arm (12).

4. Equipment according to the previous claims, **characterized in that** the feed plate (11) turns intermittently around a vertical axis powered by an electric, pneumatic or hydraulic actuator, the plate being about the height of the die on the forging press.

5. Equipment according to the previous claims, **characterized in that** the translating arm (12) can move horizontally along guide means and it extends on the feed plate (11) in line and above an imprint of said feed plate.

6. Equipment according to the previous claims, **characterized in that** said translating arm (12) can move between the pick-up position of each individual initial block from an imprint of the feed plate and to the die on the press by means of a linear, preferably pneumatic, actuator.

7. Equipment according to the previous claims, **characterized in that** the translating arm gripper is of the pneumatic type and it is controlled to grasp and pick-up a block directly from an imprint of the feed plate and release it by gravity in the die on the press.

## Patentansprüche

1. Vorrichtung zum Laden von zu pressenden Anfangsblöcken in einer auf Schmiedepressen montierten Schmiedeform, mit einer um eine Drehachse drehbaren Zufuhrplatte, welche Einprägungen aufweist, die zum individuellen Aufnehmen der Anfangsblöcke ausgelegt sind, mit einem Ladekanal zum Abgeben eines Anfangsblockes in jeder Einprägung der Zuführplatte und mit einem Translationsarm, der einen Greifer aufweist und zum Abziehen jedes einzelnen Anfangsblockes aus der Zuführplatte ausgebildet ist, um ihn innerhalb der Schmiedeform der Schmiedepresse zu übertragen, wobei die Vorrichtung **dadurch gekennzeichnet ist, dass** die Zuführplatte (11) eine Mehrzahl um ihre Drehachse (X) voneinander mit Winkelabstand angeordnete Einprägungen (18) aufweist und zur zeitweiligen schrittweisen Drehung um einen Winkel gesteuert wird, der dem Abstand zwischen zwei aufeinanderfolgenden Einprägungen entspricht,
und dass der Translationsarm (12) horizontal geführt wird und sich nur geradlinig vor und zurück bewegen kann, zwischen
einer Abnahmeposition jedes einzelnen Anfangsblockes aus einer Einprägung der besagten Zuführplatte und der Schmiedeform auf der Schmiedepresse.

2. Vorrichtung nach Anspruch I, **dadurch gekennzeichnet, dass** die Zuführplatte (11) unter einem Winkel in Umfangsrichtung gleichbeabstandete Einprägungen (18) aufweist, in einer Anzahl, die nicht weniger als vier und bevorzugt sechs bis zwölf oder mehr ist.

3. Vorrichtung nach Anspruch 1 oder 2, **dadurch gekennzeichnet, dass** der Zuführplatte eine Hebevorrichtung (24) zugeordnet ist, die bei einer einen Anfangsblock (14) enthaltenen Einprägung (18) arbeitet und von unten nach oben wirkt, um den Block in der besagten Prägung oberhalb der Zuführplatte zu heben, wenn der besagte Block vom Greifer (23) des Translationsarmes (12) erfasst und angehoben wird.

4. Vorrichtung nach den vorhergehenden Ansprüchen, **dadurch gekennzeichnet, dass** die Zuführplatte (11) sich um eine Vertikalachse schrittweise dreht, angetrieben durch einen elektrischen, pneumatischen oder hydraulischen Stellantrieb, wobei die Platte sich etwa auf der Höhe der Schmiedeform auf der Schmiedepresse befindet.

5. Vorrichtung nach den vorhergehenden Ansprüchen, **dadurch gekennzeichnet, dass** der Translationsarm (12) sich an den Führungsmitteln entlang horizontal bewegen kann und sich auf der Zuführplatte in Flucht mit einer Einprägung der besagten Zuführplatte (11) befindet und oberhalb derselben erstreckt.

6. Vorrichtung nach den vorhergehenden Ansprüchen, **dadurch gekennzeichnet, dass** der besagte Translationsarm (12) sich von der Abnahmeposition jedes einzelnen Anfangsblockes aus einer Einprägung heraus der besagten Zuführplatte bis zur Schmiedeform auf der Schmiedepresse, mittels eines linearen, vorzugsweise pneumatischen Stellantriebes, bewegen kann.

7. Vorrichtung nach den vorhergehenden Ansprüchen, **dadurch gekennzeichnet, dass** der Translationsarm-Greifer vom pneumatischen Typ ist und gesteuert wird, um einen Block direkt aus einer Einprägung der Zuführplatte zu erfassen und anzuheben und ihn durch Schwerkraft in die Schmiedeform auf der Schmiedepresse abzugeben.

## Revendications

1. Équipement permettant de charger des blocs initiaux qui doivent être pressés dans une matrice montée sur des presses à forger, comprenant une plaque d'alimentation tournante autour d'un axe de rotation et équipé de empreintes destinées à recevoir individuellement les blocs initiaux, un canal de chargement pour déménager un bloc initial dans chaque empreinte de la plaque d'alimentation, et un bras de translation équipé d'une pince de préhension et destiné à sortir chaque individuel bloc initial de la plaque d'alimentation de manière à le transférer dans la matrice de la presse à forger, l'équipement **caractérisé en ce que** la plaque d'alimentation (11) est équipée d'une multiplicité d'empreintes (18) espacées angulairement autour de son axe de rotation (X) et elle est commandée pour tourner de manière intermittente chaque fois d'un angle correspondant à la distance entre chaque deux empreintes consécutives, et **en ce que** le bras de translation (12) est guidé horizontalement et il est soumis seulement à se déplacer en avant et en arrière de façon rectiligne entre une position de prise de chaque individuel bloc initial sur une empreinte de ladite plaque d'alimentation et la matrice de la presse à forger.

2. Équipement selon la revendication 1, **caractérisé en ce que** la plaque d'alimentation (11) est équipée d'un certain nombre d'empreintes (18) au moins quatre, de préférence de six à douze ou plus, angulairement équidistantes le long de sa périphérie.

3. Équipement selon la revendication 1 ou 2, **caractérisé en ce que** la plaque d'alimentation est associée à un élévateur (24) opérant au niveau d'une empreinte (18) contenant un bloc initial (14) et fonctionnant à partir du bas vers le haut de façon à soulever le bloc dans ladite empreinte au-dessus de la plaque d'alimentation lorsque ledit bloc est saisi et pris par la pince de préhension (23) du bras de translation (12).

4. Équipement selon les revendication précédentes, **caractérisé en ce que** la plaque d'alimentation (11) tourne de manière intermittente autour d'un axe vertical entraîné par un actionneur électrique, pneumatique ou hydraulique, la plaque étant à peu près à la même hauteur de la matrice de la presse à forger.

5. Équipement selon les revendications précédentes, **caractérisé en ce que** le bras de translation (12) peut se déplacer horizontalement le long de moyens de guidage et s'étend sur la plaque d'alimentation (11) en ligne avec et au-dessus d'une empreinte de ladite plaque d'alimentation.

6. Équipement selon les revendications précédentes, **caractérisé en ce que** ledit bras de translation (12) peut se déplacer entre la position de prise de chaque bloc initial à partir de une empreinte de la plaque d'alimentation et jusqu'à la matrice sur la presse au moyen d'un actionneur linéaire, de préférence pneumatique.

7. Équipement selon les revendications précédentes, **caractérisé en ce que** la pince de préhension du bras de translation est du type pneumatique et elle est commandée pour saisir et prendre un bloc directement à partir d'une empreinte de la plaque d'alimentation et pour le lâcher par gravité dans la matrice sur la presse.
